# FASCICULE DE BREVET EUROPEEN

(11) **EP 2 042 068 B1**
(45) Date de publication et mention de la délivrance du brevet: **09.11.2011**
(21) Numéro de dépôt: 08356129.0
(22) Date de dépôt: 23.09.2008
(51) Int. Cl.: A47J 45/06, B25G 1/10

(54) **Poignée d'article culinaire avec organe de préhension déformable**
Griff eines Kochartikels mit verformbarem Grifforgan
Cooking device handle with deformable gripping element

(30) Priorité: 27.09.2007 FR 0706772
(43) Date de publication de la demande: 01.04.2009
(73) Titulaire: Seb S.A., 69130 Ecully (FR)
(72) Inventeur: Pasquini, Ludovic, 74000 Annecy (FR)
(74) Mandataire: Kiehl, Hubert

(56) Documents cités:
- EP-A- 1 704 804
- US-A- 5 926 912

## Description

La présente invention concerne une poignée pour un article culinaire tel qu'une casserole, une poêle, etc.

On connaît du document EP1704804 une poignée comportant une structure rigide et un organe de préhension entourant la structure. L'organe de préhension est réalisé dans une matière moins conductrice de la chaleur que la matière de la structure et a une forme ergonomique pour une bonne prise en main de la poignée. Toutefois, cette construction ne permet pas une déformation de l'organe de préhension nécessaire pour l'adaptation de la forme de l'organe de préhension à la forme de la main de l'utilisateur lors de la saisie et de la manipulation de la poignée.

Le but de la présente invention est de remédier aux inconvénients précités et de proposer une poignée pour un article culinaire présentant une ergonomie optimisée permettant une adaptation de la forme de l'organe de préhension à la forme de la main de l'utilisateur.

Un autre but de l'invention est de proposer une poignée pour un article culinaire permettant une manipulation dudit article culinaire en toute sécurité en limitant la température de l'organe de préhension et en garantissant une bonne tenue de la poignée dans la main de l'utilisateur.

Un autre but de l'invention est de proposer une poignée pour un article culinaire qui soit de conception simple et économique à mettre en oeuvre.

Ces buts sont atteints avec une poignée d'article culinaire selon la revendication 1.

Par surface d'appui de la main, on comprend une zone de pression de la main sur la poignée du type pouce, paume, doigts.

Lors de la saisie de la poignée par la main de l'utilisateur, on obtient une déformation de la paroi de l'organe de préhension dans la cavité. Cette déformation permet une adaptation de la forme de la poignée à la forme de la main, ce qui améliore la prise en main de la poignée.

La cavité est disposée entre la paroi et la structure rigide.

Cette disposition permet d'obtenir une déformation de la paroi dans la cavité sans que la structure rigide ne soit sollicitée et n'interfère dans la déformation.

De préférence, la cavité a une profondeur comprise entre 2 et 10 millimètres, de préférence 5 millimètres.

Cette disposition autorise une déformation de la paroi de l'organe de préhension d'une valeur comprise entre 2 et 10 millimètres, ce qui permet d'obtenir une bonne adaptation de la forme de la poignée à la forme de la main.

Avantageusement, la cavité est ouverte.

Cette disposition permet de faciliter la déformation de la paroi et permet également de simplifier la fabrication de la poignée.

Cette disposition permet également, lors de la cuisson d'aliments dans l'article culinaire, de dissiper les calories amenées par la structure vers l'organe de préhension par les ouvertures de la cavité. Ainsi la température de la poignée est limitée et la sécurité et le confort de l'utilisateur sont améliorés.

L'organe de préhension est réalisé par surmoulage sur la structure rigide.

Cette disposition permet de réaliser l'organe de préhension de façon simple et économique. De plus, la technique de surmoulage permet d'obtenir une forme ergonomique de l'organe de préhension.

De préférence, la matière de l'organe de préhension est un silicone résistant à la température.

Cette disposition permet d'avoir une température de l'organe de préhension qui reste basse et confortable pour l'utilisateur. On pourrait envisager d'autres matières de type élastomère ou mousse.

Avantageusement, la dureté shore de l'organe de préhension est comprise entre 60 et 80 shores, de préférence 70 shores.

Cette disposition permet d'obtenir un toucher de l'organe de préhension souple et doux et ainsi de procurer un grand confort d'utilisation.

De préférence, l'organe de préhension comporte une partie antérieure inférieure comprenant la paroi et la cavité exempte de matière et adjacente à ladite paroi.

Cette disposition permet d'obtenir une zone de déformation située face à l'appui de l'index de la main sur l'organe de préhension. Lorsque l'utilisateur soulève l'article culinaire du type poêle alourdi par la préparation, l'inertie de cet ensemble induit un choc appliqué par la poignée sur l'index. La déformation de la paroi située face à l'index permet d'absorber une partie du choc et ainsi de diminuer la fatigue de l'utilisateur.

Avantageusement, l'organe de préhension comporte une partie postérieure comprenant les deux parois latérales et les deux cavités exemptes de matière et adjacentes auxdites parois.

Cette disposition permet d'obtenir une zone de déformation située entre la paume de la main et le majeur et l'auriculaire.

L'invention sera mieux comprise à l'étude des modes de réalisation pris à titre nullement limitatif et illustrés dans les figures annexées dans lesquelles :
- La figure 1 illustre une vue en perspective d'une poignée pour un article culinaire selon un mode particulier de réalisation de l'invention.
- La figure 2 illustre une vue en coupe selon la ligne II-II de la poignée de la figure 1.
- La figure 3 illustre une vue en coupe selon la ligne III-III de la poignée de la figure 1.
- La figure 4 illustre une vue éclatée en perspective de la poignée de la figure 1.
- La figure 5 illustre une vue en perspective d'un autre mode de réalisation d'une poignée pour un article culinaire.
- La figure 6 illustre une vue éclatée en perspective de la poignée de la figure 5.

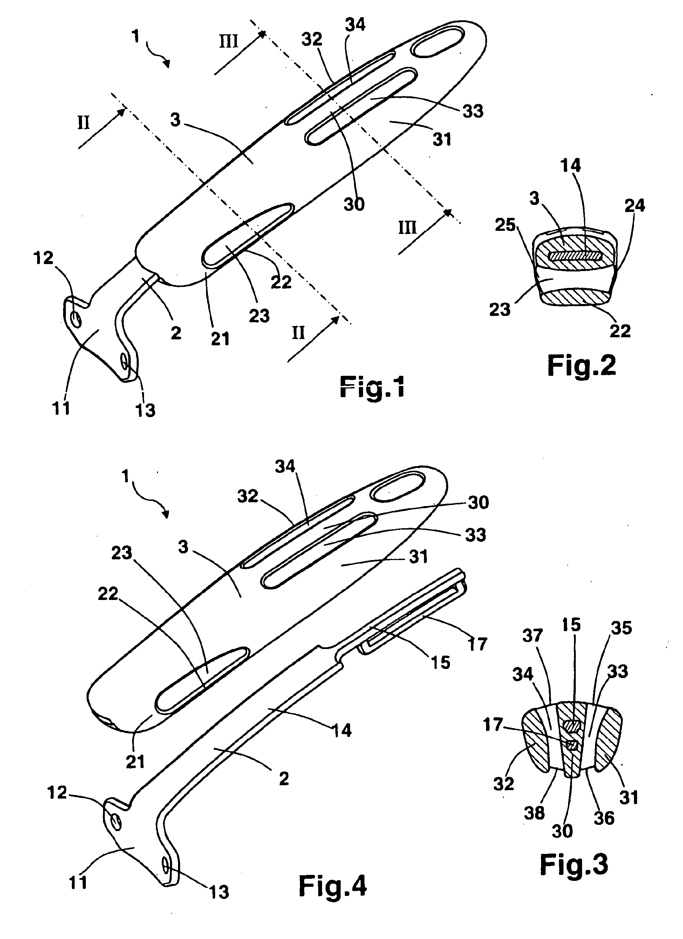

Tel que visible aux figures 1 à 4, la poignée 1 d'article culinaire comporte une structure rigide 2 et un organe de préhension 3 rapporté autour de la structure rigide 2.

La structure rigide 2 comprend une partie antérieure 11 adaptée à accoster une calotte d'article culinaire. La partie antérieure 11 comporte des moyens de fixation à la calotte, par exemple deux ouvertures 12, 13 permettant le passage de deux rivets.

A partir de la partie antérieure 11, la structure rigide 2 comprend un corps 14 de section sensiblement rectangulaire qui s'étend longitudinalement. Le corps 14 comporte une partie postérieure amincie 15 renforcée par une arche 17 disposée sous cette partie postérieure 15.

L'organe de préhension 3 est surmoulé sur le corps 14 de la structure rigide 2 permettant de donner audit organe de préhension 3 une forme ergonomique adaptée à être saisie par la main d'un utilisateur. La matière de l'organe de préhension 3 est un silicone souple.

L'organe de préhension 3 comporte une partie antérieure inférieure 21 comprenant une paroi 22 positionnée sensiblement horizontalement face à l'index de la main de l'utilisateur lors de la saisie de la poignée 1.

Une cavité 23, exempte de matière, est adjacente à la paroi 22 et s'étend longitudinalement pour permettre la déformation de ladite paroi 22 lors de la saisie de la poignée 1. La cavité 23 est disposée dans la matière de l'organe de préhension 3, entre la paroi 22 et le corps 14 de la structure rigide 2 et elle présente deux ouvertures latérales 24, 25 (fig.2).

L'organe de préhension 3 comporte une partie postérieure 30 comprenant deux parois latérales 31, 32 positionnées sensiblement verticalement face à la paume et à l'annulaire et à l'auriculaire de la main de l'utilisateur lors de la saisie de la poignée 1.

Deux cavités 33, 34, exemptes de matière, sont adjacentes aux deux parois 31, 32 et s'étendent longitudinalement pour permettre les déformations des parois 31, 32 lors de la saisie de la poignée 1. Les cavités 33, 34 sont disposées dans la matière de l'organe de préhension 3, entre les parois 31, 32 et la partie postérieure amincie 15 de la structure rigide 2 et elles présentent chacune deux ouvertures latérales 35, 36 et 37, 38 (fig.3).

En fonctionnement, lors de la prise et de la manipulation de la poignée 1, les parois 22, 31, 32 peuvent se déformer dans les cavités 23, 33, 34 sous la pression des différentes parties de la main d'une valeur allant jusqu'à dix millimètres.

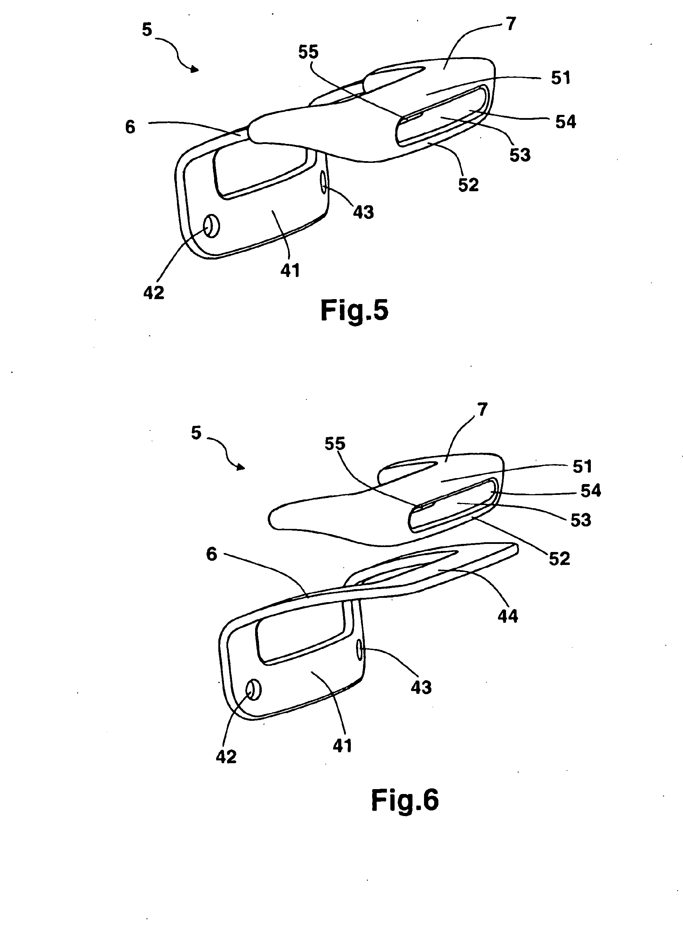

Les figures 5 et 6 illustrent un autre mode de réalisation de l'invention et se rapportent à une poignée 5 pour une casserole ou un faitout. Ce type d'article culinaire comporte généralement un récipient équipé dans sa partie supérieure extérieure de deux poignées diamétralement opposées.

La poignée 5 comporte une structure rigide 6 et un organe de préhension 7 rapporté autour de la structure rigide 6.

La structure rigide 6 comprend une partie antérieure 41 adaptée à accoster le récipient. La partie antérieure 41 comporte des moyens de fixation à la calotte, par exemple deux ouvertures 42, 43 permettant le passage de deux rivets.

La structure rigide 6 comprend un corps 44 de forme générale en U et de section sensiblement rectangulaire s'étendant perpendiculairement à la partie antérieure 41.

L'organe de préhension 7 est surmoulé sur le corps 44 de la structure rigide 6. L'organe de préhension 7 comporte une partie postérieure inférieure 51 comprenant une paroi 52 positionnée sensiblement horizontalement face aux doigts de la main de l'utilisateur lors de la saisie de la poignée 5, par exemple le majeur et l'annulaire.

Une cavité 53, exempte de matière, est adjacente à la paroi 52 et s'étend pour permettre la déformation de ladite paroi 52 lors de la saisie de la poignée 5. La cavité 53 est disposée dans la matière de l'organe de préhension 7, entre la paroi 52 et le corps 44 de la structure rigide 6 et elle présente deux ouvertures latérales 54, 55.

Bien entendu, l'invention n'est nullement limitée aux modes de réalisation décrits et illustrés qui n'ont été donnés qu'à titre d'exemple. Des modifications restent possibles, notamment du point de vue de la constitution des divers éléments ou par substitution d'équivalents techniques, sans sortir pour autant du domaine de protection de l'invention.

Ainsi, la cavité 23, 33, 34, 53 peut comporter des cloisons souples, fractionnant cette cavité et permettant de modifier la souplesse de la paroi 22, 31, 32, 52.

## Revendications

1. Poignée (1, 5) d'article culinaire, adaptée à être saisie par une main d'un utilisateur, comportant une structure rigide (2, 6) reliée à l'article culinaire et un organe de préhension (3, 7) souple rapporté autour de la structure rigide (2, ) et réalisé par surmoulage sur la structure rigide (2, 6) ledit organe de préhension (3, 7) souple comportant au moins une partie comprenant une paroi (22, 31, 32, 52) d'épaisseur comprise entre 2 et 10 millimètres, de préférence 5 millimètres et définissant une surface d'appui de la main **caractérisée en ce qu'**au moins une cavité (23, 33, 34, 53) exempte de matière, intégrée à l'organe de préhension (3, 7), est adjacente à la paroi (22, 31, 32, 52) pour permettre la déformation de ladite paroi (22, 31, 32, 52) lors de la saisie de la poignée (1, 5) et **en ce que** la cavité (23, 33, 34, 53) est disposée entre la paroi (22, 31, 32, 52) et la structure rigide (2, 6).

2. Poignée d'article culinaire selon la revendication 1 **caractérisée en ce que** la cavité (23, 33, 34, 53) a une profondeur comprise entre 2 et 10 millimètres, de préférence 5 millimètres.

3. Poignée d'article culinaire selon l'une quelconque des revendications 1 à 2, **caractérisée en ce que** la cavité (23, 33, 34, 53) est ouverte.

4. Poignée d'article culinaire selon l'une quelconque des revendications 1 à 3, **caractérisée en ce que** la matière de l'organe de préhension (3, 7) est un silicone résistant à la température.

5. Poignée d'article culinaire selon l'une quelconque des revendications 1 à 4, **caractérisé en ce que** la dureté shore de l'organe de préhension (3, 7) est comprise entre 60 et 80 shores, de préférence 70 shores.

6. Poignée d'article culinaire selon l'une quelconque des revendications 1 à 5, **caractérisée en ce que** l'organe de préhension (3) comporte une partie antérieure inférieure (21) comprenant la paroi (22) et la cavité (23) exempte de matière et adjacente à ladite paroi (22).

7. Poignée d'article culinaire selon l'une quelconque des revendications 1 à 6, **caractérisée en ce que** l'organe de préhension (3) comporte une partie postérieure (30) comprenant les deux parois (31, 32) latérales et les deux cavités (33, 34) exemptes de matière et adjacentes auxdites parois (31, 32).

## Claims

1. A cooking utensil handle (1, 5), designed to be hand-held, comprising a rigid structure (2, 6) connected to the cooking utensil and a flexible gripping component (3, 7) overmoulded on the rigid structure (2, 6) said flexible gripping component (3, 7), connected around the rigid structure (2, 6) and comprising at least one part having a wall (22, 31, 32, 52) with a thickness between 2 and 10 millimetres, preferably 5 millimetres and defining a support surface for the hand **characterised in that** at least one cavity (23, 33, 34, 53) free of material, integrated into the gripping component (3, 7) is adjacent to the wall (22, 31, 32, 52) to allow the deformation of said wall (22, 31, 32, 52) when the handle (1, 5) is held and **in that** the cavity (23, 33, 34, 53) is arranged between the wall (22, 31, 32, 52) and the rigid structure (2, 6).

2. A cooking utensil handle according to claim 1 **characterised in that** the cavity (23, 33, 34, 53) has a depth between 2 and 10 millimetres, preferably 5 millimetres.

3. A cooking utensil handle according to any one of claims 1 to 2, **characterised in that** the cavity (23, 33, 34, 53) is open.

4. A cooking utensil handle according to any one of claims 1 to 3, **characterised in that** the gripping component (3, 7) is made of heat-resistant silicone.

5. A cooking utensil handle according to any one of claims 1 to 4, **characterised in that** the Shore hardness of the gripping component (3, 7) ranges between 60 and 80 shores, preferably 70 shores.

6. A cooking utensil handle according to any one of claims 1 to 5, **characterised in that** the gripping component (3) comprises a lower front part (21) comprising the wall (22) and the cavity (23) free of material and adjacent to said wall (22).

7. A cooking utensil handle according to any one of claims 1 to 6, **characterised in that** the gripping component (3) comprises a rear part (30) comprising the two lateral walls (31, 32) and the two cavities (33, 34) free of material and adjacent to said walls (31, 32).

## Patentansprüche

1. Griff (1, 5) eines Kochartikels, der angepasst ist, um mit einer Hand des Benutzers erfasst zu werden, umfassend eine starre Struktur (2, 6), die mit dem Kochartikel verbunden ist, und ein biegsames Greifelement (3, 7), das um die starre Struktur (2, 6) herum angebracht und durch Umformung der starren Struktur (2, 6) hergestellt ist, wobei das biegsame Greifelement (3, 7) mindestens einen Bereich umfasst, der eine Wand (22, 31, 32, 52) mit einer Dicke aufweist, die zwischen 2 und 10 Millimeter, vorzugsweise 5 Millimeter beträgt, und der eine Auflagefläche für die Hand definiert, **dadurch gekennzeichnet, dass** mindestens eine Aushöhlung (23, 33, 34, 53), die frei von Material und in das Greifelement (3, 7) integriert ist, an die Wand (22, 31, 32, 52) angrenzt, um die Verformung der Wand (22, 31, 32, 52) beim Erfassen des Griffes (1, 5) zu ermöglichen, und **dadurch**, dass die Aushöhlung (23, 33, 34, 53) zwischen der Wand (22, 31, 32, 52) und der starren Struktur (2, 6) angeordnet ist.

2. Griff eines Kochartikels nach Anspruch 1, **dadurch gekennzeichnet, dass** die Aushöhlung (23, 33, 34, 53) eine Tiefe aufweist, die zwischen 2 und 10 Millimeter, vorzugsweise 5 Millimeter, beträgt.

3. Griff eines Kochartikels nach einem der Ansprüche 1 bis 2, **dadurch gekennzeichnet, dass** die Aushöhlung (23, 33, 34, 53) offen ist.

4. Griff eines Kochartikels nach einem der Ansprüche 1 bis 3, **dadurch gekennzeichnet, dass** das Material des Greifelements (3, 7) ein temperaturbeständiges Silikon ist.

5. Griff eines Kochartikels nach einem der Ansprüche 1 bis 4, **dadurch gekennzeichnet, dass** die Shore-Härte des Greifelements (3, 7) zwischen 60 und 80 Shore, vorzugsweise 70 Shore, beträgt.

6. Griff eines Kochartikels nach einem der Ansprüche 1 bis 5, **dadurch gekennzeichnet, dass** das Greifelement (3) einen unteren Vorderbereich (21) umfasst, der die Wand (22) und die Aushöhlung (23) umfasst, die frei von Material ist und an die Wand (22) angrenzt.

7. Griff eines Kochartikels nach einem der Ansprüche 1 bis 6, **dadurch gekennzeichnet, dass** das Greifelement (3) einen Hinterbereich (30) umfasst, der die zwei seitlichen Wände (31, 32) und die zwei Aushöhlungen (33, 34) umfasst, die frei von Material sind und an die Wände (31, 32) angrenzen.
